**Europäisches Patentamt**

**European Patent Office**

**Office européen des brevets**

(19)

(11) Publication number: **0 163 422**

**A2**

(12) # EUROPEAN PATENT APPLICATION

(21) Application number: **85302951.0**

(22) Date of filing: **26.04.85**

(51) Int. Cl.⁴: **G 05 D 16/00**
**//D21F1/48**

(30) Priority: **27.04.84 US 604805**

(43) Date of publication of application:
**04.12.85 Bulletin 85/49**

(84) Designated Contracting States:
**AT BE DE FR GB IT NL SE**

(71) Applicant: **ALBANY INTERNATIONAL CORP.**
**1 Sage Road**
**Menards New York 12201(US)**

(72) Inventor: **Bolton, Joseph A.**
**Summit Lane**
**Queensbury New York 12801(US)**

(72) Inventor: **Salls, David J.**
**Rd. 1 Yorkshire Drive**
**Glens Falls New York 12801(US)**

(74) Representative: **Hill, Cecilia Ann**
**Abel & Imray Northumberland House 303-306 High**
**Holborn**
**London, WC1V 7LH(GB)**

(54) Priority vacuum control system.

(57) A vacuum control system for use in controlling the vacuum supplied to a plurality of devices (A. B) by a common source (12) by giving priority to one of the devices (B) over the other so as to maintain a minimum vacuum level to the priority device. To this end, a switch (20) is provided, which is coupled to a sensor (14) in the vacuum line to the priority device (B). The switch regulates operation of a valve (V₃) in the vacuum line to the other device (A) so that the required minimum vacuum level to the priority device (B) is maintained.

FIG.2

Priority Vacuum Control System

The present invention relates to a system of regulating the application of vacuum to a plurality of devices.

Vacuum generating devices have found increased utilization in a wide variety of manufacturing and processing applications. This is exemplified in the papermaking industry where it is well known to use vacuum systems in dewatering.

In systems of this type, a variety of devices exist to create the vacuum necessary for dewatering. For example, liquid ring pumps, positive displacement pumps and centrifugal exhausters or blowers are often used. There exists also a variety of criteria which is utilized in a pump selected. This includes the ability of a particular pump to service more than one application which may be more cost effective than using a plurality of pumps. In this regard, it is often necessary that the pump supply vacuum to separate applications i.e., $A$ and $B$, which may be for example separate suction pipes or other vacuum applications. However, in certain circumstances, the vacuum demand at the point of application may change due to varying operating conditions (resulting, for example, in the case of felt dewatering from decreased felt permeability).

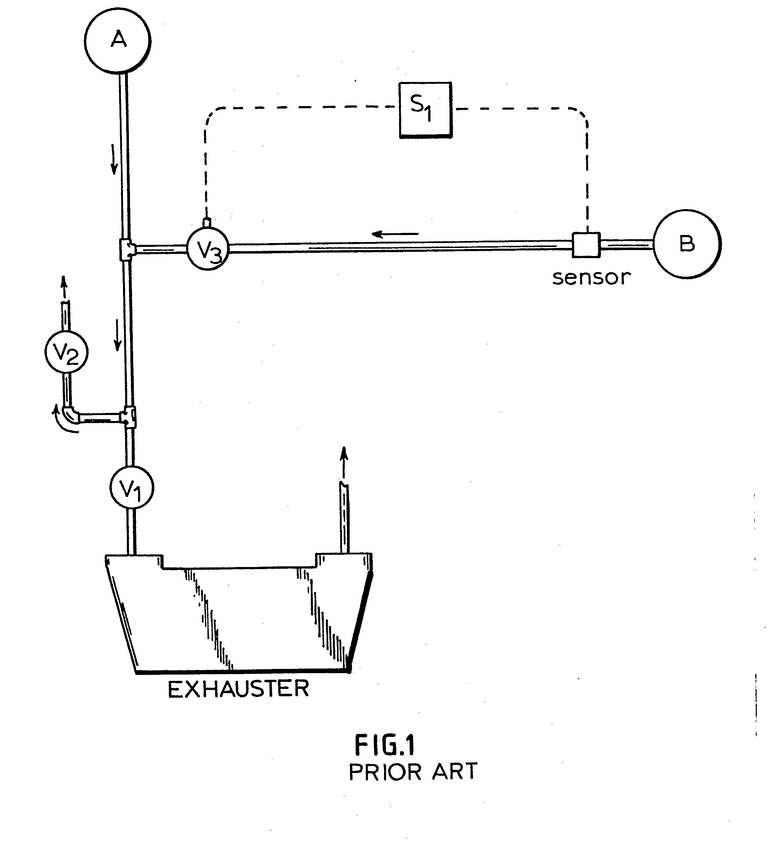

In Figure 1, there is shown a situation where there are two vacuum applications $A$ and $B$, at different vacuum levels, both being serviced by a common source, such as an exhauster. In such a situation, it was common to place a control valve $V_3$ together with a sensor in the vacuum line to the higher level application $B$ intended to be controlled. However, such a control scheme has limitations and cannot always provide the vacuum levels that are required. Suppose, for example, that application A has a requirement of vacuum less than that of application B initially. Assuming there is enough air flow capacity in the system to provide that lower vacuum level in application A, valve $V_3$ will be initially wide open trying to create a pressure drop which it is not able to achieve. In other words, if the sensor is trying to control a specific vacuum level of, for example, 12" of Hg. at application B and the initial vacuum at application A was 7" of Hg., then the control valve $V_3$ would completely open to attempt to reach the higher level of 12" Hg. However, the highest vacuum level achieved would be 7" of Hg., since the A side of $V_3$ is at 7" Hg. and the B side would have to be 7" Hg. or less.

Only when the vacuum level at application A is equal to or greater than that desired at application B is such an arrangement effective. In other words, the throttling of valve $V_3$ would occur when the vacuum level at A is greater than at B.

Such a system satisfies the requirement of application B only on occasions, which may not be sufficient in certain situations. Such a situation exists when the vacuum requirement of A varies widely such as in the case of a suction demand at the suction box associated with a papermaker's felt, which is relatively low with new felt, but changes considerably as the felt ages and permeability decreases, creating a higher vacuum. There exists a need to provide a control system that regulates the vacuum to more than one application from a common source in an effective manner.

It is an object of the invention to provide a system which enables a controlling vacuum to be supplied from a common source to a plurality of applications in a relatively simple, yet effective and inexpensive manner which gives priority to one of the applications.

- 3 -

. The present invention provides a priority vacuum control system for use in controlling vacuum supplied to at least two different devices by a common source while giving priority to one of said devices over the other, said system comprising:

first means utilizing vacuum at a first level;

second means utilizing vacuum at a second level;

vacuum means for supplying vacuum to said first and second means and including a common supply line coupled to a first vacuum line supplying vacuum to the first means and coupled to a second vacuum line supplying vacuum to the second vacuum means;

control valve means disposed in the first vacuum line and capable of regulating the amount of vacuum provided to the first means;

sensor means disposed in the second vacuum line and capable of sensing the level of vacuum in the second line; and

vacuum switch means coupled to the sensor means and the valve means so as to regulate the operation of said valve means, said switch means maintaining a predetermined minimum level of vacuum in said second vacuum line by regulating the vacuum level in the first vacuum line by adjusting the valve means so that the predetermined level in the second vacuum line is maintained.

An embodiment of the invention will now be described, by way of example, with reference to the accompanying drawings, wherein:

Figure 1 is a schematic representation, already described, of a vacuum control system utilized in the prior art;   and

Figure 2 is a schematic representation of a priority vacuum control system in accordance with the present invention.

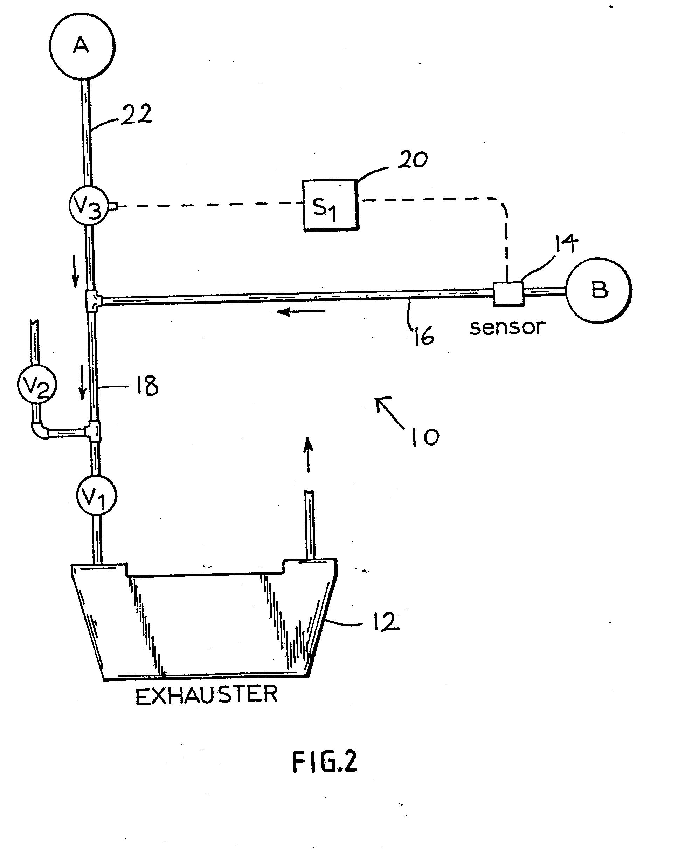

With particular regard to Figure 2 there is shown a vacuum control system 10. The system includes a source 12 of vacuum which may be a centrifugal exhauster (shown), liquid ring pump, positive displacement rotary pump etc., or any other type device suitable for providing a source of vacuum. The vacuum is to be supplied to two applications indicated as $\underline{A}$ and $\underline{B}$, which during their operation require levels of vacuum different from each other. For example, $\underline{B}$ may be a device which requires a higher and constant vacuum. $\underline{A}$ may initially require a lower vacuum level which may increase from time to time.

A typical situation in this regard is in the papermaking industry where often times it is more economical to utilize a single vacuum source rather than independent sources for each application. If we consider $\underline{A}$ to be a suction pipe for dewatering a papermakers felt then, initially, when a felt is new, the vacuum level is low. As the felt ages, its permeability decreases which automatically increases the vacuum level. The $\underline{B}$ application may be one that requires a constant higher vacuum and one in which it is desirable to provide priority of it over the $\underline{A}$ situation.

To provide for this, a sensor 14 is provided in the feed line 16 to $\underline{B}$ which in turn is coupled to a main feed line 18 to the vacuum source 12. This sensor 14 is responsive to the vacuum level in line 16 and is coupled to $S_1$ which is an adjustable sensor activator switch 20 (of any type suitable for the purpose) which regulates a control valve $V_3$ positioned in the feed line 22 to $\underline{A}$. Valves $V_1$ and $V_2$ are a main inlet control valve and surge valve respectively.

In operation, a certain vacuum level exists in line 18 as determined by valve $V_3$. Switch 20 monitors a minimum set point for a desired vacuum level at $\underline{B}$ via sensor 14 and as such a minimum vacuum level is set to exist in line 16. At application $\underline{A}$, initially a lower vacuum level than at $\underline{B}$ is

required. If upon start up, the vacuum level at $\underline{A}$ is low, then $V_3$ will be throttled down via the control 20 so as to maintain the minimum level of vacuum in line 16. As the vacuum level at application $\underline{A}$ increases, the sensor switch will de-throttle (i.e., open) $V_3$ so long as the minimum vacuum level in line 16 is maintained.

When the vacuum level at $\underline{A}$ equals that at $\underline{B}$, $V_3$ would be totally open with no pressure drop taking place thereacross. The controlling factor at this point for the level of vacuum in the system would be valve $V_1$ at the exhauster 12 and therefore, the vacuum level at $\underline{B}$ would be at or above the minimum set point. A minimum vacuum level at $\underline{B}$ would always therefore be assured thereby providing it with desired priority.

Note that while an exhauster and papermaking applications have been referred to, it was merely by way of example and should by no means be deemed exclusive. Note further that when using a vacuum source other than an exhauster in the absence of an inlet control valve ($V_1$), the vacuum level in the system will be bound by the maximum capacity of the source.

CLAIMS:

1.      A priority vacuum control system for use in controlling vacuum supplied to at least two different devices by a common source while giving priority to one of said devices over the other, said system comprising:

first means utilizing vacuum at a first level;

second means utilizing vacuum at a second level;

vacuum means for supplying vacuum to said first and second means and including a common supply line coupled to a first vacuum line supplying vacuum to the first means and coupled to a second vacuum line supplying vacuum to the second vacuum means;

control valve means disposed in the first vacuum line and capable of regulating the amount of vacuum provided to the first means;

sensor means disposed in the second vacuum line and capable of sensing the level of vacuum in the second line; and

vacuum switch means coupled to the sensor means and the valve means so as to regulate the operation of said valve means, said switch means maintaining a predetermined minimum level of vacuum in said second vacuum line by regulating the vacuum level in the first vacuum line by adjusting the valve means so that the predetermined level in the second vacuum line is maintained.

2.      A system in accordance with claim 1, wherein the first vacuum level is initially lower than the second vacuum level and said valve means is throttled by the switch means so as to maintain a higher vacuum level in the second vacuum line.

3.      A system in accordance with claim 2, wherein as the first vacuum level approaches the second vacuum level the switch means de-throttles the valve means while maintaining the predetermined level.

4.      A system in accordance with claim 3, which includes a main control valve disposed in the common supply line, said main control valve being operable to control the amount of vacuum in the first and second vacuum lines when the first level is greater than or equal to the second level with the valve means completely open.

5.      A system in accordance with claim 4, wherein the common source of vacuum is an exhauster.

**FIG.1**
PRIOR ART

FIG.2